(19) Europäisches Patentamt
European Patent Office
Office européen des brevets

(11) **EP 4 186 857 A1**

(12) **EUROPEAN PATENT APPLICATION**

(43) Date of publication:
**31.05.2023 Bulletin 2023/22**

(21) Application number: **21210789.0**

(22) Date of filing: **26.11.2021**

(51) International Patent Classification (IPC):
**C01B 32/158** (2017.01)      **C01B 32/162** (2017.01)
**C01B 32/174** (2017.01)

(52) Cooperative Patent Classification (CPC):
**C01B 32/158; C01B 32/162; C01B 32/174**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nanocyl S.A.**
**5060 Sambreville (BE)**

(72) Inventors:
• **JORIS, Jean-Philippe**
**1040 Etterbeek (BE)**
• **CHAN, Fang-Yue**
**5590 Achêne (BE)**
• **HERMOSO LIMON, Juan**
**1000 Bruxelles (BE)**

(74) Representative: **AWA Benelux**
**Parc d'affaires Zénobe Gramme - Bât. K**
**Square des Conduites d'Eau 1-2**
**4020 Liège (BE)**

(54) **CARBON NANOTUBE DISPERSION, METHOD FOR OBTAINING IT AND USE OF IT IN ELECTRODE MATERIALS**

(57) The present invention is related to a carbon nanotube dispersion comprising:
- Multi-walled carbon nanotubes, comprising between 0.1 and 13% by weight of iron-free catalytic remnants, said remnants comprising one or more iron-free metal oxide compound(s) of at least three metals selected from the group consisting of aluminum, vanadium, cobalt and molybdenum
- an amide-based solvent
- polyvinylpyrrolidone; and
- an amine-based compound.

The present invention is further related to a method for the preparation of MWCNT dispersions and their use in batteries.

**EP 4 186 857 A1**

**Description**

**Field of the Invention**

The present invention relates to a carbon nanotube dispersion, more particularly to a stable multi-walled carbon nanotube dispersion, excellent in dispersibility of carbon nanotubes and storage. The present invention also relates to a method for preparing said dispersion and to a battery electrode mixture layer for a lithium ion secondary battery containing such a battery electrode mixture layer.

**State of the Art**

Carbon nanostructures (CNSs) refer collectively to nanosized carbon structures having various shapes, such as nanotubes, nanohairs, fullerenes, nanocones, nanohorns, and nanorods. Carbon nanostructures can be widely utilized in a variety of technological applications because they possess excellent characteristics.

Carbon nanotubes (CNTs) are tubular materials consisting of carbon atoms arranged in a hexagonal pattern and have a diameter of approximately 1 to 100 nm. Carbon nanotubes exhibit insulating, conducting or semi-conducting properties depending on their inherent chirality. Carbon nanotubes have a structure in which carbon atoms are strongly covalently bonded to each other. Due to this structure, carbon nanotubes have a tensile strength approximately 100 times greater than that of steel, they are highly flexible and elastic, and are chemically stable

Carbon nanotubes are divided into three types: single-walled carbon nanotubes (SWCNTs) consisting of a single sheet and having a diameter of about 1 nm; double-walled carbon nanotubes (DWCNTs) consisting of two sheets and having a diameter of about 1.4 to about 3 nm; and multi-walled carbon nanotubes (MWCNTs) consisting of three or more sheets and having a diameter of about 5 to about 100 nm.

Depending on their diameter, length, and chirality, carbon nanotubes may exhibit unique optical, electrical, thermal, and mechanical properties.

However, the advantageous properties of carbon nanotubes are often unrealized on a macroscopic level for several reasons. The first reason is a tendency of carbon nanotubes to crystallize in rope-like structures which become entangled into networks. Strong Van-der-Waals interactions between two carbon nanotubes lead to their alignment and to their consequent packing into ropes. This aggregation of carbon nanotubes often adversely affects both their electrical and mechanical behavior. The second reason is the insolubility or poor dispersion of carbon nanotubes in common organic solvents and polymer matrixes.

In order to address these problems, researchers have developed many methods for preparing uniform and stable carbon nanotube dispersions.

JP 2016514080 A, relates to a dispersion liquid containing a dispersion liquid medium, a polymer dispersion aid, and carbon nanotubes dispersed in the dispersion liquid medium. The dispersion liquid is selected from the group of water, acetone, nitrile, alcohol, dimethylformamide, N-methylpyrrolidone, pyrrolidone derivative, butyl acetate, methoxypropyl acetate, alkylbenzene, cyclohexane derivative and mixtures thereof; poly (vinylpyrrolidone) is disclosed as the dispersion aid among a wide variety of different polymers.

CN 104795570 A, relates to a composite conductive paste comprising between 4.0 and 5.0 parts of carbon nanotubes, between 0.5 and.5 parts of reduced expanded graphite, between 0.3 and 1.2 parts of polyvinylpyrrolidone, between 88 and 93 parts of N-methyl pyrrolidone and between 0.001 and 0.01 part of a complexing agent, wherein the complexing agent is at least one of ethylenediaminetetraacetic acid, sulfosalicylic acid, and acetylacetone.

EP 3816103 A1, relates to a carbon nanotube dispersion, comprising a carbon nanotube, a solvent, such as an amide-based organic solvent such as N-methyl-2-pyrrolidone and N-ethyl-2-pyrrolidone, and a dispersant such as polyvinylpyrrolidone.

US 7682590 A1, relates to a mixture of an amide-based organic solvent and a polyvinylpyrrolidone for dispersing a carbon nanotube.

US 2011301251 A1, relates to a dispersible single-walled and multi-walled carbon nanotubes prepared by dissolving surfactants in a solvent to form a solution; adding carbon nanotubes to the solution to form a mixture, wherein the surfactant comprises polyvinylpyrrolidone, and wherein the solvent may be N-methylpyrrolidone.

JP2005162877 A, discloses a carbon nanotube dispersion solution consisting of carbon nanotubes, an amide-based polar organic solvent, and polyvinylpyrrolidone, wherein the amide-based polar organic solvent is N-methylpyrrolidone (NMP).

JP2008138039 discloses a carbon nanofiber dispersion comprising an amide-based organic solvent, an amine-compound and a polymer which is polyvinylpyrrolidone, a copolymer of vinylpyrrolidone and vinylacetate, a copolymer of vinylpyrrolidone and vinylimidazole, or a copolymer of vinylpyrrolidone and vinylcabrolactam, or a combination thereof. The amide-based organic solvent, is selected from dimethylformamide, diethylformamide, dimethylacetamide, N-methylpyrrolidone and the like, while the amine-based compound is selected from 2-methylaminoethanol, 2-aminoethanol, isopropanolamine, n-propylamine, 2-ethoxyethylamine, ethanolamine and the like.

JP 2015072899 (A) discloses a carbon fiber dispersion liquid containing a polymer-based dispersant, the polymer being selected from a cellulose derivative, polyvinylpyrrolidone, polyvinyl alcohol, polyvinyl acetal, and polyamic acid salt, or a mixture of two or more thereof. The dispersion liquid further may comprise N-methyl-2-pyrrolidone and an amine compound such as trimethylamine.

EP 3786110 (A1) discloses a carbon nanotube dispersion having N-methyl-2-pyrrolidone as a solvent and having excellent viscosity, dispersibility, and storage stability despite having a high carbon nanotube concentration, and providing a cell electrode composite layer having uniform and satisfactory coating film properties and low electrode plate resistance. The carbon nanotube dispersion is characterized by containing carbon nanotubes, polyvinylpyrrolidone, N-methyl-2-pyrrolidone, and an amine compound as a dispersing auxiliary. The carbon nanotube dispersion contains from 10 parts by weight to less than 25 parts by weight of polyvinylpyrrolidone and from 2 parts by weight to 10 parts by weight of an amine-based compound with respect to 100 parts by weight of the carbon nanotubes. The amine-based compounds are selected from the group consisting of an aliphatic primary amine, an aliphatic secondary amine, an aliphatic tertiary amine, an amino acid, an alkanolamine, a polyoxyalkylene alkylamine, a polyamine, and a nitrogen-containing alicyclic heterocyclic compound. The alkanolamines, as disclosed in the description, are dimethylaminoethanol, monoethanolamine, diethanolamine, methyldiethanolamine, and triethanolamine.

Carbon nanotubes have attracted attention as potential electrode backbone or buffer materials in lithium batteries.

Typical lithium-ion batteries utilize carbon anodes (negative electrode) and lithiated transition metal oxide cathodes (positive electrode) situated on opposite sides of a microporous polymer separator.

A lithium-ion cell begins life with all of the lithium in the cathode and upon charging, a percentage of this lithium is moved over to the anode and intercalated within the carbon anode.

A failure in lithium-ion batteries is the result of a formation of dendrites within the battery. Dendrites are microscopic metal deposits that can form within the cell. Dendrite formation generally begins in the anode and creates an internal shortcut when it extends through the separator to the cathode.

When iron impurities from any electrode dissolve in the electrolyte, there is a significant risk that these impurities migrate on the anode side and initiate dendrite growth by deposition. Because of this, iron-free materials are required as electrode material.

When using MWCNT's as electrode material, the risk of battery failure caused by those dendrites arises.

Consequently, MWCNT's comprising interstitial iron-components obtained by a process using a catalytic system comprising an iron-based graphitization catalyst should be avoided.

Therefore the present inventors have successfully produced iron-free supported catalyst and MWCNT's using said iron-free supported catalysts, yet they came to the conclusion that the dispersion mediums, disclosed in the prior art, are not sufficient to efficiently disperse the MWCNT's prepared from said iron-free catalysts, said MWCNT's comprising iron-free catalyst remnants.

Due to a longer length of the MWCNT's prepared from iron-free catalysts, and the resulting nano- and microstructures formed, the dispersion in N-methylpyrrolidone comprising polyvinylpyrrolidone creates gel-like highly viscous dispersions, which are very difficult to process, i.e. good homogeneity is hardly obtained and application on the electrode surface for lithium battery applications is barely practicable.

## Aim of the Invention

The aim of the present invention is to disclose a dispersion medium for smoothly dispersing MWCNT's prepared in a process involving iron-free catalysts for a method for the preparation of the MWCNT dispersion, as well as its use in batteries.

## Summary of the invention

The present invention discloses a carbon nanotube dispersion comprising:

- multi-walled carbon nanotubes, comprising between 0.1 and 13% by weight of iron-free catalytic remnants, said remnants comprising one or more iron-free metal oxide compound(s) of at least three metals selected from the group consisting of aluminum, vanadium, cobalt and molybdenum;
- an amide-based solvent;
- polyvinylpyrrolidone; and
- an amine-based compound.

Preferred embodiments of the present invention disclose one or more of the following features:

- the amine-based compound is selected from the group consisting of an aliphatic amine, an amino acid, an alkanolamine, and mixtures thereof;
- the amine- based compound is at least one alkanolamine of the formula:

$$NH_2 - CR1,R2 - CH,R2 - (CH_2)_n - OH$$

- wherein
- R1 is a methyl, ethyl, propyl or butyl group;
- R2 is hydrogen, a methyl, ethyl, propyl or butyl group;
- n is an integer of from 0 to 3;

- the alkanolamine is selected from the group consisting of 2-amino-2-methyl-1-propanol, 2-amino-2-methyl-1-butanol, 3-amino-3-methyl-1-butanol, 3-amino-2-methyl-1-butanol, 4-amino-4-methyl -1-pentanol and mixtures thereof;
- the alkanolamine is 2-amino-2-methyl-1-propanol;
- the amide-based solvent is selected from the group consisting of dimethylformamide, diethylformamide, dimethylacetamide, N-methyl-2-pyrrolidone and mixtures thereof;
- the amide-based solvent is N-methyl-2-pyrrolidone;
- the carbon nanotube dispersion comprises:

- between 2 and 6% by weight of iron-free catalyst residues comprising multi-walled carbon nanotubes;
- between 0.01 and 2% by weight of polyvinylpyrrolidone;
- between 0.1 and 2% by weight of amine-based compound;

based on the total weight of amide-based solvent, iron-free catalyst residues comprising multi-walled carbon nanotubes, amine-based compound and polyvinylpyrrolidone, where the sum of the weight percentages of amide-based solvent, iron-free catalyst residues comprising multi-walled carbon nanotubes, amine-based compound and polyvinylpyrrolidone, equals to 100% by weight;
- the carbon nanotube dispersion is characterized in that the weight ratio of:

- polyvinylpyrrolidone over iron-free catalyst residues comprising multi-walled carbon nanotubes is comprised between $2.5 \cdot 10^{-4}$ and $4 \cdot 10^{-1}$;
- amine-based compound over iron-free catalyst residues comprising multi-walled carbon nanotubes is comprised between $2.5 \cdot 10^{-4}$ and $4 \cdot 10^{-1}$; and
- amine-based compound over polyvinylpyrrolidone is comprised between $1 \cdot 10^{-3}$ and 1,320;

- the carbon nanotube dispersion is characterized by a complex viscosity at 0.2% deformation, as obtained from amplitude oscillatory sweep tests with from 0.1 to 100% deformation at a fixed frequency of 1Hz, at 25°C, comprised between 10 and 1,500 Pa.s.
- the carbon nanotube dispersion is characterized in that the dispersed iron-free catalyst residues comprising multi-walled carbon nanotubes aggregates have a D90 equal to or less than 15 $\mu$m, as measured by a Malvern Mastersizer M3000, D90 representing the equivalent spherical diameter where 90% by volume of the aggregates lies below.

The present invention further discloses a method for the production of the MWCNT dispersion comprising the steps of:

- forming a mixture of amide-based solvent, the amine-based compound and polyvinylpyrrolidone by mixing for at least 10 minutes in a dispersion device;
- slowly adding a first part comprising between 20 and 70% of the total amount of iron-free catalyst residues comprising multi-walled carbon nanotubes, while mixing for at least 20 minutes;
- turning off the mixing allowing trapped air to be substantially removed;
- slowly adding a second part comprising between 70 and 20% of the total amount of iron-free catalyst residues comprising multi-walled carbon nanotubes while dispersing for at least 20 minutes till the dispersion becomes shiny and no aggregates are observed by the naked eye and a D90 equal to or less than 15 $\mu$m, as measured by a Malvern Mastersizer M3000, is obtained;
- turning off the mixing.

A preferred embodiment of the method relates to the dispersing device comprising a bead mill with spherical beads having a diameter comprised between 0.7 and 1.0 mm, preferably between 0.7 and 0.9 mm.

The present invention further discloses an electrode comprising the carbon nanotube dispersion and an electrode active material.

The present invention further discloses a battery electrode mixture layer comprising the carbon nanotube dispersion formed into a layer, characterized by a surface resistivity of less than 1,000 Ohm/square, as measured by a Keithley 2700 Multimeter in a 250 μm film, obtained from coating the dispersion on a polyethylene terephthalate film and evaporating the solvent.

## Detailed Description of the Invention

The present invention discloses a multi-walled carbon nanotube dispersion having excellent viscosity, dispersibility, and storage stability and providing a cell electrode composite layer having uniform and satisfactory coating film properties and low electrode plate resistance; said multi-walled carbon nanotube dispersion comprising:

- multi-walled carbon nanotubes,
- an amide-based solvent
- polyvinylpyrrolidone; and
- an amine-based compound.

The multi-walled carbon nanotubes (MWCNT's) of the present invention are obtained from a process using an iron-free supported catalysts and, as a result, still comprise catalyst remnants (also called catalyst residues).

The MWCNT's comprise between 0.1 and 13% by weight, preferably less than 10 % by weight of catalyst remnants, said remnants comprising metal compounds of at least two metals selected from the IUPAC group 4, 5, 6, 7, 9, 10, 11 and 13.

More specifically the multi-walled carbon nanotubes comprise catalyst remnants, said remnants comprising metal compounds of at least three metals selected from the group consisting of aluminum, cobalt, molybdenum and vanadium.

The MWCNT's of the present invention are substantially free of iron. By substantially free, the present invention means less than 150 ppm, preferably less than 100 ppm, more preferably less than 50 ppm, most preferably less than 10 ppm.

The inventors have observed that MWCNT's prepared from iron-free supported catalysts are longer and present a different aspect ratio and particular nano-and microstructures when compared to MWCNT's prepared from iron-comprising supported catalysts.

These differences result in a more difficult dispersion process, and in dispersions with higher viscosity when said dispersions are prepared from current dispersion mediums.

The dispersion medium of the present invention comprises a polar amide based solvent selected from the group consisting of dimethylformamide, diethylformamide, dimethylacetamide, N-methyl-2-pyrrolidone and mixtures thereof.

Preferably the polar amide based solvent of the dispersion medium of the present invention is N-methyl-2-pyrrolidone.

Polyvinylpyrrolidone for being used in the dispersion medium of the present invention is characterized by a K-value comprised between K-12 and K-90, more preferably between K-15 and K-80.

The amine-based compound for being used in the dispersion medium of the present invention is selected from the group consisting of an aliphatic primary amine, an aliphatic secondary amine, an aliphatic tertiary amine, an amino acid, an alkanolamine, and mixtures thereof.

Examples of aliphatic primary amines for being used in the dispersion medium of the present invention are ethylamine, octylamine, laurylamine, myristylamine, stearylamine, and oleylamine.

Examples of aliphatic secondary amines for being used in the dispersion medium of the present invention are diethylamine, dibutylamine, and distearylamine.

Examples of aliphatic tertiary amines for being used in the dispersion medium of the present invention are triethylamine, dimethyloctylamine, dimethyldecylamine, dimethyllaurylamine, dimethylmyristylamine, dimethylpalmitylamine, dimethylstearylamine, dimethylbehenylamine, dilaurylmonomethylamine, and trioctylamine,

Examples amino acids for being used in the dispersion medium of the present invention are alanine, methionine, proline, serine, asparagine, glutamine, lysine, arginine, histidine, aspartic acid, glutamic acid, and cysteine.

Preferably the dispersion medium of the present invention comprises an alkanolamine of the formula:

$$NH_2 - CR1,R2 - CH,R2 - (CH_2)_n - OH$$

wherein

- R1 is a methyl, ethyl, propyl or butyl group;
- R2 is hydrogen, a methyl, ethyl, propyl or butyl group;
- n is an integer of from 0 to 3.

More preferably, the dispersion medium of the present invention comprises an alkanolamine selected from the group consisting of 2-amino-2-methyl-1-propanol, 2-amino-2-methyl-1-butanol, 3-amino-3-methyl-1-butanol, 3-amino-2-methyl-1-butanol, 4-amino-4-methyl -1-pentanol and mixtures thereof.

Most preferably, the dispersion medium of the present invention comprises 2-amino-2-methyl-1 -propanol.

Preferably, the dispersion medium of the present invention comprises N-methyl-2-pyrrolidone, polyvinylpyrrolidone K30 and 2-amino-2-methyl-1-propanol.

Preferably, the dispersion medium of the present invention comprises:

- at least 92% by weight, more preferably at least 94% by weight, most preferably at least 95% by weight; and 99.9% by weight or less, preferably 99% by weight or less, most preferably 98.5% by weight or less of N-methyl-2-pyrrolidone;
- at least 0.01% by weight, more preferably at least 0.05% by weight, most preferably at least 0.1% by weight; and 2% by weight or less, preferably 1.7% by weight or less, most preferably 1.4% by weight or less of polyvinylpyrrolidone;
- at least 0.1% by weight, more preferably at least 0.15% by weight, most preferably at least 0.2% by weight; and 2% by weight or less, preferably 1.8% by weight or less, most preferably 1.5% by weight or less of amine-based compound;

The MWCNT's of the present invention are prepared using iron-free catalysts.

Preferably, the iron-free supported catalyst is an iron-free two-component catalyst or a three-component supported catalyst, the support comprising aluminum oxide ($Al_2O_3$) and/or aluminum hydroxide ($Al(OH)_3$) and aluminum oxide hydroxide ($AlO(OH)$) as confirmed by X-Ray diffraction.

Preferably, the iron-free two-component catalyst comprises a first cobalt-based catalytic component and a second vanadium-based catalytic component, both preferably in the form of oxide.

Preferably, the iron-free three-component graphitization catalyst comprises a first cobalt-based catalytic component, a second vanadium-based catalytic component and a third molybdenum-based catalytic component, all preferably in the form of oxide.

The aluminum-based support of both, the two-component and the three-component supported catalysts, comprises at least 30% by weight of aluminum oxide hydroxide.

The two-component and the three-component supported catalysts have a purity of at least 95%.

For the preparation of MWCNT, the supported iron-free catalyst is brought into contact with a carbon source in the gas phase.

The use of the supported catalyst allows for growth of the carbon nanotubes by chemical vapor synthesis through decomposition of the carbon source, leading to the production of the carbon nanotube aggregate.

Any carbon source that can supply carbon and can exist in the gas phase at a temperature of 300°C or more may be used without particular limitation for the chemical vapor synthesis. The gas-phase carbonaceous material is preferably a compound consisting of up to 6 carbon atoms, more preferably a compound consisting of up to 4 carbon atoms.

The iron-free catalyst according to the present invention allows for the production of MWCNT at a carbon yield comprised between 800 and 2500% by weight, preferably between 1000 and 2400% by weight, more preferably between 1100 and 2300% by weight.

The carbon yield, in % by weight, is defined as:

$$100 \, (m_{tot} - m_{cat}) \, / \, m_{cat}$$

wherein $m_{tot}$ is the total weight of product after reaction and $m_{cat}$ is the weight of the catalyst used for the reaction.

The MWCNT's obtained by the above method comprise between 0.1 and 13 % by weight, preferably 1 and 10 % by weight of the catalyst residues.

The weight percentage of catalyst residues is determined by thermogravimetric analysis or by calcination in air.

The MWCNT dispersion is prepared in a dispersion device generally used for dispersing pigments and the like.

Examples of a dispersion device include for instance homomixers, planetary mixers, colloid mills, cone mills, ball mills, sand mills, pearl mills, wet jet mills, roll mills and bead mills.

Preferably, the dispersion device comprises a bead mill with spherical beads having a diameter comprised between 0.7 and 1.0 mm, preferably between 0.7 and 0.9 mm.

In the method for preparing the MWCNT dispersion, the quantities (or weight percentages) of MWCNT's are quantities (or weight percentages) of MWCNT's comprising between 0.1 and 13% by weight of iron-free catalyst residues, further referred to as iron-free catalyst residues comprising MWCNT. The catalyst residues are intrinsically present in the MWCNT's as a result of their preparation. Thus, for a dispersion of 2% by weight of iron-free catalyst residues comprising MWCNT, comprising between 0.1 and 13% by weight of iron-free catalyst residues, said dispersion will comprise between 1.998 and 1.74% by weight of pure MWCNT's.

First, a dispersion medium is prepared by mixing for at least 10 minutes, preferably for at least 20 minutes, the amide-based solvent, the amine-based compound and polyvinylpyrrolidone in a dispersion device, said mixture comprising:

- at least 92% by weight, more preferably at least 94% by weight, most preferably at least 95% by weight; and 99.9% by weight or less, preferably 99% by weight or less, most preferably 98.5% by weight or less of amide-based solvent;
- at least 0.01% by weight, more preferably at least 0.05% by weight, most preferably at least 0.1% by weight; and 2% by weight or less, preferably 1.7% by weight or less, most preferably 1.4% by weight or less of polyvinylpyrrolidone;
- at least 0.1% by weight, more preferably at least 0.15% by weight, most preferably at least 0.2% by weight; and 2% by weight or less, preferably 1.8% by weight or less, most preferably 1.5% by weight or less of amino-based compound;

the total of amide-based solvent, polyvinylpyrrolidone and amine-based component being 100% by weight.

Then, 2% by weight of iron-free catalyst residues comprising MWCNT's are slowly added while mixing for at least 20 minutes, preferably for at least 30 minutes.

Subsequently, the mixing is switched off to allow the trapped air to be substantially removed.

A further amount of iron-free catalyst residues comprising MWCNT's, up to 6% by weight, is slowly added while continuing the mixing for at least 20 minutes, preferably for at least 30 minutes, until a shiny homogeneous dispersion free of visible aggregates is obtained.

The amounts of amide-based solvent, polyvinylpyrrolidone, amine-based compound and iron-free catalyst residues comprising MWCNT's are selected in such a way that the dispersion of iron-free catalyst residues comprising MWCNT's is characterized in that the weight ratio of:

- polyvinylpyrrolidone over iron-free catalyst residues comprising MWCNT's is comprised between $2.5\ 10^{-4}$ and $4\ 10^{-1}$, preferably between $6.5\ 10^{-3}$ and $3.5\ 10^{-1}$, more preferably between $1.2\ 10^{-1}$ and $3\ 10^{-1}$;
- amine-based compound over iron-free catalyst residues comprising MWCNT's is comprised between $2.5\ 10^{-4}$ and $4\ 10^{-1}$, preferably between $6.5\ 10^{-3}$ and $3.5\ 10^{-1}$, more preferably between$1.2\ 10^{-1}$ and $3\ 10^{-1}$; and
- amine-based compound over polyvinylpyrrolidone is comprised between $1\ 10^{-3}$ and 1,320, preferably between $1\ 10^{-2}$ and 500, more preferably between $5\ 10^{-1}$ and 2.

In the present invention, by mixing is meant dispersing and homogenizing.

The dispersion of iron-free catalyst residues comprising MWCNT's is considered as being completed when the dispersed iron-free catalyst residues comprising MWCNT aggregates are characterized by a D90 equal to or less than 15 μm, as measured by a Malvern Mastersizer M3000 wherein D90 represents the equivalent spherical diameter where 90% by volume of the aggregates lies below.

The particle size distribution of dispersions is measured via laser diffraction technique using a Malvern Mastersizer M3000. The samples are diluted in a water-based fluid carrier after automatized cleaning and verification of the background from the particle analyzer software. Once the obscuration is within the limits, 5 measurements are recorded and averaged. Measurements are done at ambient temperature

The dispersion of iron-free catalyst residues comprising MWCNT's is characterized by a complex viscosity at 0.2% deformation, as obtained from amplitude oscillatory sweep tests with from 0.1 to 100% deformation at a fixed frequency of 1Hz, of 10 Pa.s or more. Preferably, the complex viscosity at 2% deformation is less than 1,500 Pa.s, more preferably less than 1,000 Pa.s, most preferably less than 500 Pa.s, as measured on a control stress rheometer Anton Paar MCR-301 at 25°C

In order to assess the performance of the iron-free catalyst residues comprising MWCNT dispersion of the present invention in either cathode or anode of batteries, in particular lithium-ion batteries, the resistivity is measured as surface resistivity in a film of 250 microns. A dispersion of iron-free catalyst residues comprising MWCNT's is coated over the PET (polyethylene terephthalate) and solvent is evaporated at 80°C in an oven before measurements. Afterwards, a Keithley 2700 Multimeter is employed to measure 6 points on the surface of the film and make the average.

### Examples

The following illustrative examples are merely meant to exemplify the present invention but they are not intended to limit or otherwise define the scope of the present invention.

Example 1: *Synthesis of the iron-free three-component graphitization catalyst*

5000 parts by weight of water, at 60°C, comprising 277 parts by weight of citric acid and 387 parts by weight of malic acid, were added to 340 parts by weight of ammonium metavanadate and 64 parts by weight of ammonium heptamolybdate tetrahydrate, and mixed during 15 minutes using a paddle mixer, resulting in a first aqueous solution.

Similarly, 5000 parts by weight of water, at 60°C, were added to 4931 parts by weight of cobalt(II) acetate tetrahydrate and mixed during 15 minutes using a paddle mixer, resulting in a second aqueous solution.

The second aqueous solution was added to the first aqueous solution and mixed during 15 minutes using a paddle mixer.

To the mixture of the first and the second aqueous solution, 13333 parts by weight of aluminum hydroxide (Apyral® 200 SM - Nabaltec), with specific surface area (BET) of 15 $m^2$/g, was added and mixed during 15 minutes using a paddle mixer.

The paste thus obtained was then transferred to ceramic crucibles with a large opening and subjected to a heating process, wherein the paste was heated to 120°C with a heating gradient of 2°C/min and an air flow of 0.5 $m^3$/h and maintained at 120°C for 5 hours.

After 5 hours at 120°C, the paste was further heated to a temperature of 400°C with a heating gradient of 2°C/min. and maintained at 400°C for 5 hours while maintaining an air flow of 0.5 $m^3$/h.

The solid material thus obtained was cooled down to room temperature and ground, by means of a conical grinder, to a powder characterized by a volume median particle diameter ($D_{50}$) of 58 μm.

The iron-free supported catalyst is characterized by

- a mass ratio of cobalt to aluminum between 2.53 $10^{-1}$;
- a mass ratio of vanadium to aluminum between 3.20 $10^{-2}$;
- a mass ratio of molybdenum to aluminum between 7.54 $10^{-3}$;
- a mass ratio of cobalt to the combined mass of vanadium and molybdenum of 6.4

Example 2 : *Synthesis of MWCNT*

1.0 g of the iron-free supported graphitization catalyst of example 1 was spread in a quartz vessel which subsequently was brought in the center of a quartz tube-type reactor with an inlet and an outlet.

The center of the quartz tube reactor where the vessel comprising the catalyst is located was heated to a temperature of 700°C.

Subsequently, ethylene gas, nitrogen and hydrogen were allowed to flow through the quartz tube reactor at a flow rate of 1.744 l/min ($C_2H_4$); 0.857 l/min ($N_2$) and 0.286 l/min ($H_2$) during 20 minutes.

The MWCNT is produced at a carbon yield of 2076 % by weight and comprises 5% by weight of catalyst remnants.

Example 3: *Preparation of the MWCNT dispersion*

MWCNT dispersions comprising 3% by weight of iron-free catalyst residues comprising MWCNT's of example 2 were prepared according to the formulations as in table 1,

Table 1

| Ex. | %wt PVP | amine | %wt amine | Complex Viscosity (Pa.s) | D90 | Surface Resistivity (Ω/sq) |
|---|---|---|---|---|---|---|
| 4 | 0.45 | AMP | 0.375 | 53.9 | 14.4 | 983 |
| 5 | 0.45 | N-octylamine | 0.375 | 345 | 22 | 855 |
| 6 | 0.75 | AMP | 0.75 | 16 | | |

In table 1, AMP stands for 2-amino-2-methyl-1-propanol.

In table 1, the MWCNT dispersions were prepared in a pilot production line operating in circulation mode using a bead mill with beads of 0.8 mm diameter and a premixing equipment consisting of a tank with a mixer.

The iron-free catalyst residues comprising MWCNT dispersions of examples 4 and 5 were characterized by a D90 of 14.4 $\mu$m (amine-based compound: 2-amino-2-methyl-1-propanol) and 22 $\mu$m (amine-based compound: n-octylamine) respectively, as measured by a Malvern Mastersizer M3000. By way of comparison, the MWCNT dispersion, prepared under the same dispersion conditions with a comparable energy input, but not comprising the amine-based compound, is characterized by a D90 of 19.1 $\mu$m.

The MWCNT dispersions of examples 4 and 5 were tested for surface resistivity. Surface resistivity values of 855 $\Omega$/sq (amine-based compound: n-octylamine), and of 983 $\Omega$/sq (amine-based compound: 2-amino-2-methyl-1-propanol) were respectively measured. By way of comparison, the surface resistivity for the MWCNT dispersion, not comprising the amine-based compound, equals 911.8 $\Omega$/sq. According to the inventors, the surface resistivity values for the n-octylamine comprising dispersion medium, for the 2-amino-2-methyl-1-propanol comprising dispersion medium and for an identical dispersion medium but not comprising an amine-based compound, are comparable given the experimental error on surface resistivity measurements.

The benefits of the addition of an amine-based compound and in particular of the alkanolamines, as claimed in the present invention, for complex viscosity, D90 and surface resistivity are clearly demonstrated.

**Claims**

1. A carbon nanotube dispersion comprising:

   - multi-walled carbon nanotubes, comprising between 0.1 and 13% by weight of iron-free catalytic remnants, said remnants comprising one or more iron-free metal oxide compound(s) of at least three metals selected from the group consisting of aluminum, vanadium, cobalt and molybdenum;
   - an amide-based solvent;
   - polyvinylpyrrolidone; and
   - an amine-based compound.

2. The carbon nanotube dispersion according to claim 1, wherein the amine-based compound is selected from the group consisting of an aliphatic amine, an amino acid, an alkanolamine, and mixtures thereof.

3. The carbon nanotube dispersion according to claim 1 or 2 wherein the amine-based compound is at least one alkanolamine of the formula:

$$NH_2 - CR1,R2 - CH,R2 - (CH_2)_n - OH$$

   - wherein
   - R1 is a methyl, ethyl, propyl or butyl group;
   - R2 is hydrogen, a methyl, ethyl, propyl or butyl group;
   - n is an integer of from 0 to 3.

4. The carbon nanotube dispersion according to any of claims 1 to 3, wherein the alkanolamine is selected from the group consisting of 2-amino-2-methyl-1-propanol, 2-amino-2-methyl-1-butanol, 3-amino-3-methyl-1-butanol, 3-amino-2-methyl-1-butanol, 4-amino-4-methyl -1-pentanol and mixtures thereof.

5. The carbon nanotube dispersion according to any of claims 1 to 4, wherein the alkanolamine is 2-amino-2-methyl-1-propanol.

6. The carbon nanotube dispersion according to any of claims 1 to 5, wherein the amide-based solvent is selected from the group consisting of dimethylformamide, diethylformamide, dimethylacetamide, N-methyl-2-pyrrolidone and mixtures thereof.

7. The carbon nanotube dispersion according to any of claims 1 to 6, wherein the amide-based solvent is N-methyl-2-pyrrolidone.

8. The carbon nanotube dispersion according to any of claims 1 to 7, comprising:

   - between 2 and 6% by weight of iron-free catalyst residues comprising multi-walled carbon nanotubes;
   - between 0.01 and 2% by weight of polyvinylpyrrolidone;

- between 0.1 and 2% by weight of amine-based compound;

based on the total weight of amide-based solvent, iron-free catalyst residues comprising multi-walled carbon nanotubes, amine-based compound and polyvinylpyrrolidone, where the sum of the weight percentages of amide-based solvent, iron-free catalyst residues comprising multi-walled carbon nanotubes, amine-based compound and polyvinylpyrrolidone, equals to 100% by weight.

9. The carbon nanotube dispersion according to any of claims 1 to 8, wherein the weight ratio of:

 - polyvinylpyrrolidone over iron-free catalyst residues comprising multi walled carbon nanotubes is comprised between $2.5 \ 10^{-4}$ and $4 \ 10^{-1}$;
 - amine-based compound over iron-free catalyst residues comprising multi-walled carbon nanotubes is comprised between $2.5 \ 10^{-4}$ and $4 \ 10^{-1}$;and
 - amine-based compound over polyvinylpyrrolidone is comprised between $1 \ 10^{-3}$ and 1,320.

10. The carbon nanotube dispersion according to any of claims 1 to 9, being **characterized by** a complex viscosity at 0.2% deformation, as obtained from amplitude oscillatory sweep tests with from 0.1 to 100% deformation at a fixed frequency of 1Hz, at 25°C, comprised between 10 and 1,500 Pa.s.

11. The carbon nanotube dispersion according to any of claims 1 to 10, wherein the dispersed iron-free catalyst residues comprising multi-walled carbon nanotubes aggregates are **characterized by** a D90 equal to or less than 15 $\mu$m, as measured by a Malvern Mastersizer M3000, D90 representing the equivalent spherical diameter where 90% by volume of the aggregates lies below.

12. A method for producing the carbon nanotube dispersion according to any of the claims 1 to 11 comprising the steps of:

 a. forming a mixture of amide-based solvent, the amine-based compound and polyvinylpyrrolidone by mixing for at least 10 minutes in a dispersion device;
 b. slowly adding a first part comprising between 20 and 70% of the total amount of iron-free catalyst residues comprising multi-walled carbon nanotubes, while mixing for at least 20 minutes;
 c. turning off the mixing allowing trapped air to be substantially removed;
 d. slowly adding a second part comprising between 70 and 20% of the total amount of iron-free catalyst residues comprising multi-walled carbon nanotubes while dispersing for at least 20 minutes till the dispersion becomes shiny and no aggregates are observed by the naked eye and a D90 equal to or less than 15 $\mu$m, as measured by a Malvern Mastersizer M3000, is obtained;
 e. turning off the mixing.

13. The method according to claim 12 wherein the dispersing device comprises a bead mill with spherical beads having a diameter comprised between 0.7 and 1.0 mm, preferably between 0.7 and 0.9 mm.

14. An electrode comprising a carbon nanotube dispersion according to claims 1 to 11 and an electrode active material.

15. A battery electrode mixture layer comprising the carbon nanotube dispersion for an electrode according to claim 14 formed into a layer, **characterized by** a surface resistivity of less than 1,000 Ohm/square, as measured by a Keithley 2700 Multimeter in a 250 $\mu$m film, obtained from coating the dispersion of claims 1 to 11 on a polyethylene terephthalate film and evaporating the solvent.

Europäisches
Patentamt

European
Patent Office

Office européen
des brevets

**EUROPEAN SEARCH REPORT**

Application Number

EP 21 21 0789

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 3 786 110 A1 (TOYO INK SC HOLDINGS CO LTD [JP]; TOYOCOLOR CO LTD [JP]) 3 March 2021 (2021-03-03) * paragraphs [0009] - [0068]; claims 1-5 * ----- | 1-15 | INV. C01B32/158 C01B32/162 C01B32/174 |
| A | NGUYEN MY ANH ET AL: "Synthesis of single-walled carbon nanotubes over Co-Mo/Al 2 O 3 catalyst by the catalytic chemical vapor deposition of methane", ADVANCES IN NATURAL SCIENCES: NANOSCIENCE AND NANOTECHNOLOGY, vol. 4, no. 3, 1 July 2013 (2013-07-01), page 035018, XP55919232, DOI: 10.1088/2043-6262/4/3/035018 Retrieved from the Internet: URL:https://www.researchgate.net/profile/T hang-Van-Le/publication/258311338_Synthesi s_of_single-walled_carbon_nanotubes_over_C o-MoAl2O3_catalyst_by_the_catalytic_chemic al_vapor_deposition_of_methane/links/53d21 8320cf228d363e90799/Synthesis-of-single-wa lled-carbon-nanotubes-over-Co-Mo-Al2O3-cat alyst-by-t> * "Experimental method" * ----- | 1-15 | |

TECHNICAL FIELDS SEARCHED (IPC)

C01B

-/--

The present search report has been drawn up for all claims

| Place of search | Date of completion of the search | Examiner |
|---|---|---|
| The Hague | 9 May 2022 | Corrias, M |

EPO FORM 1503 03.82 (P04C01)

page 1 of 2

**EUROPEAN SEARCH REPORT**

Application Number

EP 21 21 0789

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ESTEVES LAURA M. ET AL: "CATALYST PREPARATION METHODS TO REDUCE CONTAMINANTS IN A HIGH-YIELD PURIFICATION PROCESS OF MULTIWALLED CARBON NANOTUBES", BRAZILIAN JOURNAL OF CHEMICAL ENGINEERING, vol. 36, no. 4, 1 October 2019 (2019-10-01), pages 1587-1600, XP55919237, BR ISSN: 0104-6632, DOI: 10.1590/0104-6632.20190364s20190251 Retrieved from the Internet: URL:https://www.scielo.br/j/bjce/a/hFygSDw SqJsCYy5HWGysRzN/?lang=en&format=pdf> * "Experimental"; table 2 * ----- | 1-15 | |
| A | US 2007/224106 A1 (SAKAKIBARA YOUICHI [JP] ET AL) 27 September 2007 (2007-09-27) * paragraphs [0009] - [0043] * ----- | 1-15 | TECHNICAL FIELDS SEARCHED (IPC) |

The present search report has been drawn up for all claims

| Place of search | Date of completion of the search | Examiner |
|---|---|---|
| The Hague | 9 May 2022 | Corrias, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 21 21 0789

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2022

| Patent document cited in search report | | Publication date | Patent family member(s) | | Publication date |
|---|---|---|---|---|---|
| EP 3786110 | A1 | 03-03-2021 | CN | 111971252 A | 20-11-2020 |
| | | | EP | 3786110 A1 | 03-03-2021 |
| | | | JP | 6531926 B1 | 19-06-2019 |
| | | | JP | 2019192537 A | 31-10-2019 |
| | | | KR | 20210003144 A | 11-01-2021 |
| | | | WO | 2019208637 A1 | 31-10-2019 |
| US 2007224106 | A1 | 27-09-2007 | US | 2007224106 A1 | 27-09-2007 |
| | | | WO | 2005052053 A1 | 09-06-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016514080 A
- CN 104795570 A
- EP 3816103 A1
- US 7682590 A1
- US 2011301251 A1
- JP 2005162877 A
- JP 2008138039 B
- JP 2015072899 A
- EP 3786110 A1